# EUROPÄISCHE PATENTANMELDUNG

(11) **EP 3 770 900 A1**
(43) Veröffentlichungstag der Anmeldung: **27.01.2021**
(21) Anmeldenummer: 19188623.3
(22) Anmeldetag: 26.07.2019
(51) Int. Cl.: G10D 1/00

(54) **BAUTEILE FÜR SAITENINSTRUMENTE**

(71) Anmelder: Heraeus Additive Manufacturing GmbH, 63450 Hanau (DE)
(72) Erfinder: Stolpe, Moritz, 63450 Hanau (DE); Klosch-Trageser, Michael, 63450 Hanau (DE)
(74) Vertreter: Haggenmüller, Christian

(57) **Zusammenfassung**

Die vorliegende Erfindung betrifft ein Bauteil eines Saiteninstrumentes, wobei das Bauteil eine amorphe Metalllegierung enthält.

## Beschreibung

Für die Herstellung von Bauteilen für Saiteninstrumente (wie z.B. elektrische Gitarren) kommen eine Reihe unterschiedlicher Materialien und Verarbeitungsverfahren zum Einsatz. Die Herstellung metallischer Bauteile für Saiteninstrumente erfolgt herkömmlicherweise über Fräsen oder Drehen aus konventionellen kristallinen Metallen wie z.B. Stahl, Aluminiumlegierungen oder Messing.

Diese Materialien können je nach Anwendung und Instrument Eigenschaften aufweisen, die sich negativ auf Klangverhalten, Optik, Haptik und/oder Bespielbarkeit des Instruments auswirken.

So können insbesondere bei elektrischen Gitarren, in denen meistens Brücken aus massiven metallischen Werkstoffen verwendet werden, Dämpfungseffekte auftreten. Diese Dämpfungseffekte können konstruktiv oder auch durch Materialdämpfung bedingt sein. Durch die Dämpfung wird die Schwingung der Saite negativ beeinflusst und der sogenannte "Sustain" (d.h. ein Maß dafür, wie lange eine angeschlagene Saite hörbar klingt) ist kürzer.

Durch Korrosionseffekte kann die Optik des Instruments verschlechtert werden. So kann beispielsweise Handschweiß zu einem unerwünschten Anlaufen polierter Oberflächen führen. Die Oberflächenbehandlung konventioneller Werkstoffe, wie z.B. das Polieren oder das künstliche Altern ("Aging") erfordert häufig aufwändige Verfahren. So ist eine Oberflächenveredelung (z.B. Polieren) oft nur in mehreren Schritten möglich, bei denen gegebenenfalls auch polierfähige Schichten aufgebracht werden müssen (beispielsweise Galvanisierung mit Chrom). Auch weisen die konventionellen metallischen Werkstoffe häufig nur eine geringe Kratzbeständigkeit auf.

FR 3051588 A1 beschreibt ein Saiteninstrument, bei dem Korpus und Hals einstückig vorliegen.

US 2011/162,506 A1 beschreibt ein Saiteninstrument, das einen additiv gefertigten Resonanzkasten aufweist.

CN 108641319 A beschreibt die Verwendung eines Polymer-Holz-Compositmaterials für die Herstellung eines Musikinstruments durch additive Fertigung ("3D-Druck").

CN 106652975 A beschreibt die Verwendung amorpher Metalle für die Herstellung einer Zunge in Blasinstrumenten, eines Idiophons bei Schlaginstrumenten oder einer Saite bei Saiteninstrumenten.

EP 2 057 622 A2 beschreibt eine Saite für ein Musikinstrument, die ein amorphes Metall enthält.

Auf der Internetseite https://www.liquidmetal.com/industrial/ wird erwähnt, dass amorphe Metalle für die Fertigung der Stegstecker oder des Sattels einer Gitarre verwendet werden können.

Eine Aufgabe der vorliegenden Erfindung ist die Bereitstellung von Bauteilen für Saiteninstrumente (beispielsweise eine elektrische Gitarre), die eine vorteilhafte Wirkung auf den Sustain des Saiteninstruments haben. Weiterhin sollten die für das Saiteninstrument vorgesehenen Bauteile möglichst eine hohe Korrosionsbeständigkeit, hohe Kratzfestigkeit sowie eine gute Polierbarkeit aufweisen.

Gelöst wird die Aufgabe durch die Verwendung eines Bauteils, das eine amorphe Metalllegierung enthält, in einem Saiteninstrument.

Im Rahmen der vorliegenden Erfindung wurde erkannt, dass amorphe Metalllegierungen aufgrund ihrer geringen mechanischen Dämpfung den Sustain (d.h. das Ausklingverhalten) eines Saiteninstrumentes wie z.B. einer elektrischen Gitarre vorteilhaft beeinflussen können. Weiterhin weisen amorphe Metalllegierungen eine hohe Härte auf, wodurch die Kratzfestigkeit gegenüber konventionellen kristallinen metallischen Werkstoffen verbessert wird. Auch die Korrosionsbeständigkeit und Polierbarkeit des Bauteils können durch die Verwendung einer amorphen Metalllegierung deutlich und ohne zusätzlichen Aufwand verbessert werden.

Wie nachfolgend noch eingehender beschrieben wird, lassen sich amorphe metallische Formkörper, die eine komplexe Geometrie und/oder ein Volumen > 1 cm³ aufweisen, wie sie für bestimmte Bauteile von Saiteninstrumenten erforderlich sind, sehr effizient nur über ein Pulverbett-basiertes Laser- oder Elektronenstrahlschmelzen herstellen. Klassische Herstellungsverfahren sind hier nicht geeignet. Kleinere Bauteile können mit klassischen metallurgischen Verfahren wie Abgießen, Zerspanen (z.B. Fräsen) oder Spritzguss (Injection Moulding) hergestellt werden.

Das Bauteil des Saiteninstrumentes ist beispielsweise eine Brücke, ein Steg, ein Vibrato, ein Saitenreiter, ein oder mehrere Knöpfe, eine Stimmmechanik, ein Gurtpin, eine Pickup-Einfassung, eine Pickup-Abdeckkappe, ein Schlagbrett (engl.: "Pickguard"), ein Bundstäbchen oder eine Abdeckung.

Die Brücke kann beispielsweise eine einteilige Brücke (d.h. Brücke und Saitenhalter in einem Bauteil zusammengefasst) oder eine mehrteilige Brücke (z.B. eine als Tune-o-matic/Stop-Tail bezeichnete Brücke) sein. Weiterhin kann die Brücke eine feststehende Brücke oder eine beweglich gelagerte Brücke (auch als Vibrato-System-Brücke bezeichnet) sein.

Das Saiteninstrument ist beispielsweise eine Gitarre, insbesondere eine elektrische Gitarre, eine Geige oder ein Cello. In einer bevorzugten Ausführungsform ist das Saiteninstrument eine elektrische Gitarre.

Geeignete Metalllegierungen, die aus der Schmelze amorph erstarren können (z.B. in einem additiven Fertigungsverfahren oder auch in einem konventionellen metallurgischen Verfahren), sind dem Fachmann bekannt.

Beispielsweise ist die amorphe Metalllegierung eine Übergangsmetall-basierte Legierung, eine Al-basierte Legierung oder eine Mg-basierte Legierung. Die Übergangsmetall-basierte Legierung ist beispielsweise eine Zr-basierte Legierung, eine Cu-basierte Legierung, eine Fe-basierte Legierung, eine Ti-basierte Legierung, eine Ni-basierte Legierung oder eine Edelmetall-basierte Legierung (z.B. eine Pt- oder Pd-basierte Legierung). Eine Zr-basierte Legierung ist eine Legierung, die als Hauptbestandteil (in Atom%) Zr enthält. Gleiches gilt auch für die anderen der oben genannten Legierungen. So ist z.B. eine Cu-basierte Legierung eine Legierung, deren Hauptbestandteil (in Atom%) Kupfer ist.

Übersichtsdarstellungen zu amorphen Metalllegierungen finden sich beispielsweise in folgenden Publikationen:
- *"*Bulk Metallic Glasses - An Overview", Ed.: M. Miller und P. Liaw, Springer, S. 209-223;
- A.L. Greer, Materials Today, Jan-Feb 2009, Vol. 12, S. 14-22;
- A. Inoue et al., Materials, 2010, 3, S. 5320-5339.

Beispielhafte Kombinationen von Elementen in amorph erstarrenden Metalllegierungen sind Folgende:
- Späte Übergangsmetalle und Nichtmetalle, wobei das späte Übergangsmetall die Basis darstellt, beispielsweise Ni-P, Pd-Si, Au-Si-Ge, Pd-Ni-Cu-P, Fe-Cr-Mo-P-C-B
- Frühe und späte Übergangsmetalle, wobei beide Metalle die Basis darstellen können, wie z.B. Zr-Cu, Zr-Ni, Ti-Ni, Zr-Cu-Ni- Al, Zr-Ti-Cu-Ni-Be
- Metalle aus Gruppe B mit Seltenerdmetalle, wobei das Metall B die Basis darstellt, wie z.B. Al-La, Al-Ce, AI-La-Ni-Co, La-(Al/Ga)-Cu-Ni
- Metalle aus Gruppe A mit späten Übergangsmetallen, wobei das Metall A die Basis darstellt, wie z.B. Mg-Cu, Ca-Mg-Zn, Ca-Mg-Cu

Beispielsweise kann die amorphe Metalllegierung eine Zr-Cu-AI-Nb-Legierung sein. Bevorzugt weist diese Zr-Cu-AI-Nb-Legierung außer Zirkon zusätzlich 23,5 - 24,5 Gew. % Kupfer, 3,5 - 4,0 Gew. % Aluminium sowie 1,5 - 2,0 Gew. % Niob auf, wobei sich die Gewichtsanteile zu 100 Gew. % ergänzen. Kommerziell erhältlich ist die letztgenannte Legierung unter dem Namen AMZ4® von der Heraeus Deutschland GmbH. In einer weiteren beispielhaften Ausführungsform kann die amorphe Metalllegierung die Elemente Zirkon, Titan, Kupfer, Nickel und Aluminium enthalten. Bevorzugte Legierungszusammensetzungen sind beispielsweise Zr_{52,5}Ti₅Cu_{17,9}Ni_{14,6}Al₁₀ und Zr_{59,3}Cu_{28,8}Al_{10,4}Nb_{1,5}, wobei die Indizes Atom% der jeweiligen Elemente in der Legierung angeben. Eine weitere Gruppe von Legierungen kann beispielsweise die Elemente Zr, Al, Ni, Cu und Pd enthalten, insbesondere Zr₆₀Al₁₀Ni₁₀Cu₁₅Pd₅. Eine andere geeignete Gruppe von Legierungen enthält beispielsweise mindestens 85 Gew.-% Pt sowie Cu und Phosphor, wobei die Legierung weiterhin Co und /oder Nickel enthalten kann, beispielswiese Pt_{57.5}CU_{14.5}Ni₅P₂₃ (Indizes in Atom%).

Das Bauteil des Saiteninstruments kann beispielsweise aus einer oder mehreren amorphen Metalllegierungen bestehen. Im Rahmen der vorliegenden Erfindung ist es allerdings auch möglich, dass das Bauteil neben der amorphen Metalllegierung noch ein kristallines Metall (z.B. eine oder mehrere kristalline Metalllegierungen) enthält. Beispielsweise kann die amorphe Metalllegierung als Matrix fungieren, in der eine oder mehrere kristalline Metalllegierungen dispergiert sind. Die kristalline Metalllegierung kann die gleiche Zusammensetzung oder auch eine andere Zusammensetzung wie die amorphe Matrix aufweisen. Auch mit diesen Kompositstrukturen kommen die vorteilhaften Eigenschaften der amorphen Metalle im Bauteil des Musikinstruments zum Tragen.

Wie dem Fachmann bekannt ist, zeigt eine amorphe Metalllegierung in der dynamischen Differenzkalorimetrie (DSC) einen Glasübergang sowie eine exotherme Wärmetönung beim Übergang in den kristallinen Zustand (Kristallisationsenthalpie), während in der Röntgendiffraktometrie keine scharfen Beugungsreflexe (Bragg-Peaks) erkennbar sind.

Bevorzugt weist das die amorphe Metalllegierung enthaltende Bauteil des Saiteninstruments eine Kristallinität von weniger als 50%, bevorzugter weniger als 25%, noch bevorzugter weniger als 10% auf oder ist sogar vollständig amorph. Der kristalline Anteil wird bestimmt über DSC als das Verhältnis von Kristallisationsenthalpie des Bauteilmaterials zur Kristallisationsenthalpie einer vollständig amorphen Referenzprobe (d.h. keine Beugungsreflexe im Röntgendiffraktogramm).

Weiterhin betrifft die vorliegende Erfindung ein Verfahren zur Herstellung des oben beschriebenen Bauteils eines Saiteninstruments, wobei die Herstellung durch ein additives Fertigungsverfahren oder ein nicht-additives metallurgisches Verfahren erfolgt.

Geeignete additive Fertigungsverfahren zur Herstellung metallischer amorpher Strukturen sind dem Fachmann bekannt. Beispielsweise ist das additive Fertigungsverfahren ein Pulverbett-basiertes Laser- oder Elektronenstrahlschmelzen, ein Auftragsschweißen (z.B. ein Pulver- oder Draht-Auftragsschweißen), ein Liquid-Metal-Jetting oder ein Extrusionsverfahren. Additive Fertigungsverfahren sind beispielsweise auch in der Norm EN ISO/ASTM 52921:2017 zusammengefasst. Die additive Fertigung metallischer amorpher Strukturen wird beispielsweise von S. Pauly et al., Materials Today, 16, 2013, S. 37-41; und W. Haider et al., Critical Reviews in Solid State and Materials Science, 43, 2018, S. 233-268 beschrieben.

Bevorzugt werden größere, voluminösere Bauteile des Saiteninstruments, z.B. die Brücke, der Steg, das Vibrato oder das Schlagbrett, über ein additives Fertigungsverfahren, insbesondere ein Pulverbett-basiertes Laser- oder Elektronenstrahlschmelzen hergestellt.

Das nicht-additive metallurgische Verfahren ist beispielsweise ein Gießen (z.B. ein Druckgießen, Spritzgießen oder Vakuumgießen), ein Zerspanen oder ein pulvermetallurgisches Verfahren. Beispielhafte pulvermetallurgische Verfahren zur Herstellung des Bauteils des Saiteninstruments sind Pressen (z.B. ein Heißpressen oder ein isostatisches Pressen, insbesondere ein heißisostatisches Pressen (HIP)), Metallpulverspritzgießen und/oder Sintern. Das nicht-additive metallurgische Verfahren kann beispielsweise auch mindestens zweistufig sein und zwei oder mehr der oben genannten Verfahren umfassen.

Weiterhin betrifft die vorliegende Erfindung ein Saiteninstrument, enthaltend ein oder mehrere der oben beschriebenen Bauteile.

Wie oben bereits erwähnt, ist das Saiteninstrument beispielsweise eine Gitarre, insbesondere eine elektrische Gitarre, eine Geige oder ein Cello. In einer bevorzugten Ausführungsform ist das Saiteninstrument eine elektrische Gitarre.

Das Bauteil ist beispielsweise Teil des Korpus oder des Halses des Saiteninstruments (z.B. der elektrischen Gitarre).

Beispielsweise ist das Saiteninstrument eine elektrische Gitarre und das Bauteil ist eine Brücke.

Weiterhin betrifft die vorliegende Erfindung ein Verfahren zur Herstellung des oben beschriebenen Saiteninstruments, umfassend
- die Herstellung des oben beschriebenen Bauteils durch ein additives Fertigungsverfahren oder ein nicht-additives metallurgisches Verfahren,
- das Zusammenfügen des Bauteils mit weiteren Bauteilen zu einem Saiteninstrument.

Hinsichtlich bevorzugter Merkmale des additiven Fertigungsverfahrens oder des nicht-additiven metallurgischen Herstellungsverfahrens kann auf die obigen Ausführungen verwiesen werden.

Weiterhin betrifft die vorliegende Erfindung die Verwendung eines Formkörpers, der eine amorphe Metalllegierung enthält, als Bauteil eines Saiteninstruments. Hinsichtlich beispielhafter amorpher Metalllegierungen oder bevorzugter Bauteile des Saiteninstruments kann auf die obigen Ausführungen verwiesen werden.

Amorphe Metalllegierungen enthaltende Bauteile eines Saiteninstruments weisen eine geringe mechanische Dämpfung auf und können daher den Sustain des Saiteninstruments (z.B. einer elektrischen Gitarre) verlängern. Weiterhin weisen amorphe Metalllegierungen eine hohe Härte auf, wodurch die Kratzfestigkeit gegenüber konventionellen kristallinen metallischen Werkstoffen verbessert wird. Auch die Korrosionsbeständigkeit und Polierbarkeit des Bauteils können durch die Verwendung einer amorphen Metalllegierung deutlich und ohne zusätzlichen Aufwand verbessert werden. Wenn die Herstellung des amorphen Bauteils des Saiteninstruments über ein additives Fertigungsverfahren erfolgt, sind auch komplexere und voluminösere Strukturen (wie z.B. eine Brücke einer elektrischen Gitarre) zugänglich.

## Patentansprüche

1. Ein Bauteil eines Saiteninstrumentes, wobei das Bauteil eine amorphe Metalllegierung enthält.

2. Das Bauteil nach Anspruch 1, wobei das Bauteil des Saiteninstrumentes eine Brücke, ein Steg, ein Vibrato, ein Saitenreiter, ein oder mehrere Knöpfe, eine Stimmmechanik, ein Gurtpin, eine Pickup-Einfassung, eine Pickup-Abdeckkappe, ein Schlagbrett, ein Bundstäbchen oder eine Abdeckung ist.

3. Das Bauteil nach Anspruch 3, wobei die amorphe Metalllegierung eine Übergangsmetall-basierte Legierung, eine Al-basierte Legierung oder eine Mg-basierte Legierung ist.

4. Das Bauteil nach Anspruch 3, wobei die Übergangsmetall-basierte Legierung eine Zr-basierte Legierung, eine Cu-basierte Legierung, eine Fe-basierte Legierung, eine Ti-basierte Legierung, eine Ni-basierte Legierung oder eine Edelmetall-basierte Legierung ist.

5. Ein Verfahren zur Herstellung des Bauteils eines Saiteninstruments gemäß einem der Ansprüche 1 bis 4, wobei die Herstellung durch ein additives Fertigungsverfahren oder ein nicht-additives metallurgisches Verfahren erfolgt.

6. Das Verfahren nach Anspruch 5, wobei das additive Fertigungsverfahren ein Pulverbett-basiertes Laser- oder Elektronenstrahlschmelzen, ein Auftragsschweißen, ein Liquid-Metal-Jetting oder ein Extrusionsverfahren ist.

7. Das Verfahren nach Anspruch 6, wobei das Bauteil des Saiteninstruments die Brücke, der Steg, das Vibrato oder das Schlagbrett ist.

8. Das Verfahren nach Anspruch 5, wobei das nicht-additive metallurgische Verfahren ein Gießen, ein Zerspanen oder ein pulvermetallurgisches Verfahren oder eine Kombination aus mindestens zwei dieser Verfahren ist.

9. Saiteninstrument, enthaltend ein oder mehrere Bauteile gemäß einem der Ansprüche 1 bis 4.

10. Das Saiteninstrument nach Anspruch 9, wobei das Saiteninstrument eine Gitarre, insbesondere eine elektrische Gitarre, eine Geige oder ein Cello ist.

11. Verfahren zur Herstellung eines Saiteninstruments gemäß Anspruch 9 oder 10, umfassend
- die Herstellung des Bauteils nach einem der Ansprüche 1 bis 4 durch ein additives Fertigungsverfahren oder nicht-additives metallurgisches Verfahren nach einem der Ansprüche 5-8,
- das Zusammenfügen des Bauteils mit weiteren Bauteilen zu einem Saiteninstrument.

12. Verwendung eines Formkörpers, der eine amorphe Metalllegierung enthält, als Bauteil eines Saiteninstruments.

13. Verwendung nach Anspruch 12, wobei es sich bei dem Bauteil um ein Bauteil gemäß Anspruch 2 handelt; und/oder wobei es sich bei dem Saiteninstrument um ein Saiteninstrument gemäß Anspruch 10 handelt.
